# EUROPÄISCHE PATENTSCHRIFT

(11) **EP 0 684 097 B1**
(45) Veröffentlichungstag und Bekanntmachung des Hinweises auf die Patenterteilung: **04.02.1998**
(21) Anmeldenummer: 95107475.6
(22) Anmeldetag: 17.05.1995
(51) Int. Cl.: B21D 53/88, F01N 3/28

(54) **Verfahren zur Herstellung eines Bauteiles für die Abgasanlage eines Kfz.**
Method of manufacturing au element for the exhaust system of a motor vehicle
Méthode de fabrication d'un élément pour la système d'échappement d'un véhicule automobile

(30) Priorität: 21.05.1994 DE 4417982
(43) Veröffentlichungstag der Anmeldung: 29.11.1995
(73) Patentinhaber: Schmitz & Brill GmbH, D-57413 Finnentrop (DE)
(72) Erfinder: Willeke, Winfried Dipl.Ing., D 57439 Attendorn (DE)
(74) Vertreter: Köchling, Conrad-Joachim

(56) Entgegenhaltungen:
- EP-A- 0 316 595
- EP-A- 0 413 998
- US-A- 5 055 274
- US-A- 5 070 717

## Beschreibung

Die Erfindung betrifft ein Verfahren zur Herstellung eines Bauteiles für die Abgasanlage eines Kfz., bestehend aus einem Mantelgehäuse aus Metall, einem Katalysator-Brick und einer Quellmatte nach dem Oberbegriff des Anspruches 1 (siehe z.B. US-A-5 055 274).

Gattungsgemäße Bauteile für die Abgasanlagen eines Kfz. werden bisher so hergestellt, daß zwei Katalysatoren-Halbschalen aus Metallblech im Wege des Tiefziehens erstellt werden. In die Halbschalen wird dann der Brick mit der Quellmatte eingelegt und auf einer Presse zusammengedrückt und an den Längsrandkanten, die gegeneinander zur Anlage gebracht werden, verschweißt. Bei dieser Anordnung und Ausbildung ist es praktisch nicht möglich, Fertigungstoleranzen von Halbschalen, Bricks und Quellmatten auszugleichen.

Dies führt im Ergebnis dazu, daß unter Umständen keine lagesichere Anordnung der Teile zueinander gewährleistet ist, wobei zudem nicht auszuschließen ist, daß sich zwischen Brick und Quellmatte bzw. Quellmatte und Halbschale ein Spalt bildet, so daß Abgas nicht durch den Monolithen strömt, sondern an diesem vorbei durch den Spalt.

Ausgehend von diesem Stand der Technik liegt der Erfindung die Aufgabe zugrunde, ein Verfahren gattungsgemäßer Art zu schaffen, mit dem in einfacher Weise ein entsprechendes Bauteil gefertigt werden kann, wobei sowohl ein Toleranzausgleich möglich ist, als auch eine äußerst exakte und genaue Fertigung gewährleistet ist.

Zur Lösung dieser Aufgabe schlägt die Erfindung vor, daß das Rohrstück im Wege des Hydroumformverfahrens zu dem einteiligen Mantelgehäuse aufgeweitet wird, wobei -vorzugsweise im gleichen Umformschritt oder in einem weiteren Umformschritt- an mindestens einem Längswandbereich des Mantelgehäuses eine Quetschrinne ausgeformt wird,
und daß nach dem Einschieben Quellmatte ins Mantelgehäuse die Quetschrinne oder -rinnen über ihre gesamte Länge zusammengepreßt werden, vorzugsweise kraftkontrolliert, so daß das Mantelgehäuse umfangsseitig den Brick samt Quellmatte spaltfrei umgibt.

Bevorzugt ist dabei vorgesehen, daß auf zwei diametral gegenüberstehenden Mantelgehäuse-Längswandbereichen jeweils eine Quetschrinne in V-Form ausgeformt wird, wobei die Rinnenschenkel außenseitig vom Mantel abragen und ihre Mündungen einander zugewandt sind.

Das Mantelgehäuse wird durch das an sich bekannte Hydroumformungsverfahren hergestellt. Dazu wird ein Rohrstück eines geeigneten Durchmessers und einer geeigneten Wandstärke beispielsweise in die untere Werkzeugform eines zweiteiligen Werkzeuges eingelegt, und dann die obere Werkzeugform geschlossen. In das Rohr wird dann ein Flüssigkeitsdruck von einigen 1000 bar aufgegeben, so daß sich das Rohr nach außen aufweitet und der Innenkontur des umgebenden Werkzeuges anpaßt. Auf diese Weise wird das Mantelgehäuse aufgeweitet und im Querschnitt so groß bemessen, daß es gering größer ist als dem Querschnitt des Bricks samt Quellmatte entspricht. Zudem wird vorzugsweise im gleichen Umformschritt an zwei Längsrandkanten des Gehäuses eine entsprechende Quetschrinne, vorzugsweise in V-Form ausgeformt. Anschließend kann dann in das Mantelgehäuse ein Brick samt Quellmatte axial eingeschoben werden. Durch Zusammendrücken der Quetschrinnen wird dann das Gehäuse kraftkontrolliert zusammengepreßt, so daß es umfangsseitig fest an Quellmatte und Brick anliegt.

Durch die Umformung ergeben sich niedrige Umformgrade. Das Gehäuse ist in einfacher Weise herzustellen, wobei ein Toleranzausgleich der Komponenten leicht möglich ist, da der Toleranzausgleich beim kraftkontrollierten Zusammenpressen der Rinnenschenkel erfolgt. Die Herstellung ist schnell und einfach durchzuführen, wobei auch geringe Anschlußtoleranzen einzuhalten sind, so daß Anschlußrohrstutzen oder dergleichen mit geringem Toleranzbereich angeschlossen werden können. Bei Benutzung des Bauteiles bei einer Abgasanlage von Kfz. dehnt sich das Mantelgehäuse unter Temperatureinwirkung aus, wobei ebenso die Quellmatte sich unter Temperatureinfluß ausdehnt, so daß eine Abdichtung zwischen dem Brick (Monolithen) und dem Mantelrohr erfolgt, so daß Abgas nicht an dem Brick vorbeiströmen kann.

Die Erfindung ist nachstehend anhand eines schematischen Ausführungsbeispieles beschrieben.

Es zeigt:

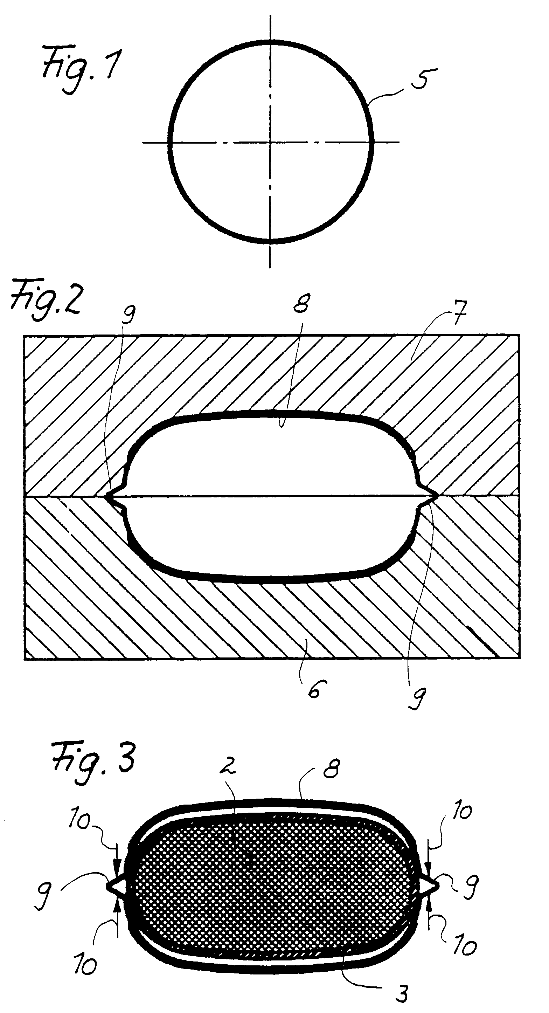

- Figur 1 bis 4: den Herstellungsvorgang in einzelnen Schritten;
- Figur 5 und 6: das fertige Bauteil gemäß Figur 4 in Seitenansicht und Draufsicht.

In der Zeichnung ist das Verfahren zur Herstellung eines Bauteiles für die Abgasanlage eines Kfz. erläutert. Das Bauteil besteht aus einem Mantelgehäuse 1 aus Metall, einem Katalysator-Brick 2 in Form eines Monolithen sowie einer Quellmatte 3, die den Brick 2 umfangsseitig umgibt.

Die Stirnseiten des Brick 2 sind frei und für durchströmendes Abgas zugänglich.

Zur Herstellung eines solchen Bauteiles wird ein Rohrstück 5 von geeignetem Durchmesser und mit geeigneter Wandstärke sowie geeigneter Länge in die untere Werkzeugform 6 eines Werkzeuges eingelegt und anschließend die obere Werkzeugform 7 aufgebracht. Das Rohrstück 5 wird dann durch Innendruck im Wege des Hydroumformverfahrens in eine Form aufgeweitet, wie aus Figur 2 ersichtlich ist. Die Querschnittsabmessung dieses Formkörpers 8 ist gering größer als der Querschnittsabmessung des Bricks 2 samt darum gelegter Quellmatte 3 entspricht. Im gleichen Umformschritt werden an zwei diametral gegenüberliegenden Längsrandkanten des Mantelgehäuses Quetschrinnen 9 angeformt, die vorzugsweise V-förmig ausgebildet sind und deren Rinnenschenkel vom Mantel nach außen abragen. Die Mündungen der Rinnen sind zueinander gewandt.

Das Formteil 8 wird aus der Form entnommen und der Brick 2 sowie die Quellmatte 3 werden axial in das Formteil eingeschoben, wie in Figur 3 ersichtlich.

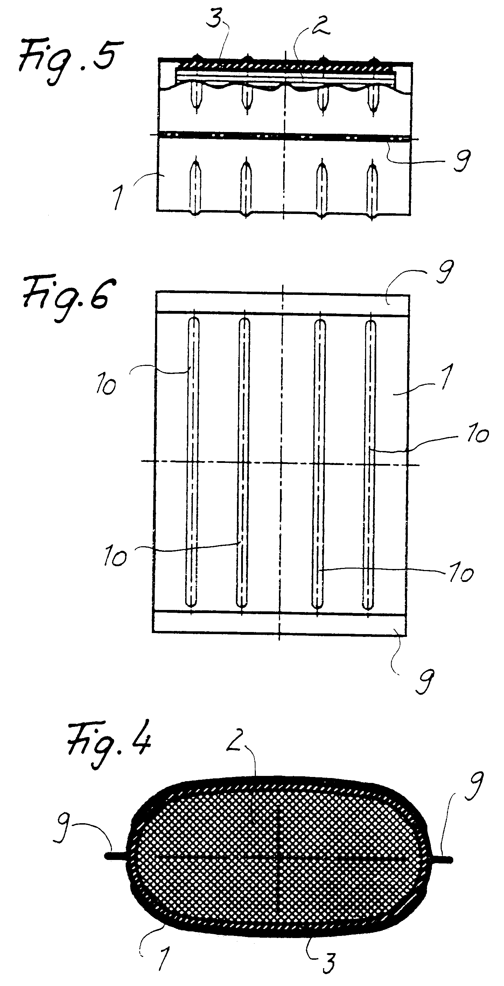

Anschließend werden die Quetschrinnen in Richtung der Pfeile 10 kraftkontrolliert beaufschlagt und zusammengedrückt, so daß die endgültige Form des Bauteiles entsteht, wie sie in Figur 4 bis 6 gezeigt ist.
Ggf. kann das Mantelgehäuse durch im Umformprozess ausgebildete Sicken oder Rippen 11 versteift sein.

Die Erfindung ist nicht auf das Ausführungsbeispiel beschränkt, sondern im Rahmen der Ansprüche vielfach variabel.

## Patentansprüche

1. Verfahren zur Herstellung eines Bauteiles für die Abgasanlage eines Kfz., bestehend aus einem Mantelgehäuse (1) aus Metall, einem Katalysator-Brick (2) und einer Quellmatte (3), bei dem ein Rohrstück (5) zu einem einteiligen Mantelgehäuse (1) aufgeweitet wird, dessen Querschnittsabmessung gering größer ist als dem Querschnitt des Bricks (2) samt darum gelegter Quellmatte (3) entspricht, und die Quellmatte (3) mit dem Brick (2) ins Mantelgehäuse (1) eingeschoben wird,
**dadurch gekennzeichnet,** daß das Rohrstück (5) im Wege des Hydroumformverfahrens zu dem einteiligen Mantelgehäuse (1) aufgeweitet wird, wobei -vorzugsweise im gleichen Umformschritt oder in einem weiteren Umformschritt- an mindestens einem Längswandbereich des Mantelgehäuses (1) eine Quetschrinne (9) ausgeformt wird, und daß nach dem Einschieben der Quellmatte (3) ins Mantelgehäuse (1) die Quetschrinne oder -rinnen (9) über ihre gesamte Länge zusammengepreßt werden, vorzugsweise kraftkontrolliert, so daß das Mantelgehäuse (1) umfangsseitig den Brick (2) samt Quellmatte (3) spaltfrei umgibt.

2. Verfahren nach Anspruch 1,
**dadurch gekennzeichnet,** daß auf zwei diametral gegenüberstehenden Mantelgehäuse-Längswandbereichen jeweils eine Quetschrinne (9) in V-Form ausgeformt wird, wobei die Rinnenschenkel außenseitig vom Mantel abragen und ihre Mündungen einander zugewandt sind.

## Claims

1. Method for producing a component for the exhaust-gas system of a motor vehicle, comprising a metal outer casing (1), a catalyst brick (2) and an expansion mat (3), in which method a pipe section (5) is expanted to form a single-piece outer casing (1) whose cross-section size is slightly greater than the cross section of the brick (2) together with the expansion mat (3) placed round it, and the expansion mat (3) with the brick (2) is pushed into the outer casing (1), characterized in that the pipe section (5) is expanded by the hydroforming method to form the single-piece outer casing (1), a pinch chanell (9) being formed, preferably in the same forming step or in a further forming step, on at least one longitudinal wall region of the outer casing (1), and in that, after the expansion mat (3) has been pushed into the outer casing (1), the pinch channel or channels (9) are pressed together over their entire length, preferably in a force-controlled manner, so that the outer casing (1) surrounds the brick (2) together with the expansion mat (3) on the circumference side in a gap-free manner.

2. Method according to claim 1, characterized in that a V-shaped pinch channel (9) is formed on each of two diametrically opposite longitudinal wall regions of the outer casing, the channel webs projecting from the casing on the outside and their openings facing one another.

## Revendications

1. Procédé de fabrication d'un élément destiné au système d'échappement d'un véhicule automobile et constitué d'un carter de protection (1) en métal, d'une brique de catalyseur (2) et d'une natte gonflante (3), selon lequel un tronçon de tube (5) est élargi en un carter de protection (1) d'un seul tenant, dont la dimension de section est légèrement supérieure à la section de l'ensemble constitué de la brique (2) et de la natte gonflante (3) posée autour de la brique, et la natte gonflante (3) pourvue de la brique (2) est enfilée dans le carter de protection (1), **caractérisé** en ce que le tronçon de tube (5) est élargi par le procédé de déformation hydraulique pour former le carter de protection (1) d'un seul tenant, une goulotte de sertissage (9) étant formée, de préférence au cours de la même étape de déformation, ou au cours d'une étape de déformation supplémentaire, sur au moins une région de paroi longitudinale du carter de protection (1), et en ce que, après avoir enfilé la natte gonflante (3) dans le carter de protection (1), la ou les goulottes de sertissage (9) sont comprimées sur toute leur longueur, de préférence avec une force contrôlée, de sorte que le carter de protection (1) entoure périphériquement sans interstice la brique (2) pourvue de la natte gonflante (3).

2. Procédé selon la revendication 1, **caractérisé** en ce qu'une goulotte de sertissage respective (9) en forme de V est formée sur deux régions de paroi longitudinale diamétralement opposées du carter de protection, les branches des goulottes dépassant extérieurement du carter et leurs embouchures étant tournées l'une vers l'autre.
